# EUROPÄISCHE PATENTANMELDUNG

(11) **EP 1 046 598 A1**
(43) Veröffentlichungstag der Anmeldung: **25.10.2000**
(21) Anmeldenummer: 99107793.4
(22) Anmeldetag: 20.04.1999
(51) Int. Cl.: B65G 47/08

(54) **Vorrichtung zur Herstellung palettierfähiger Lagen von Gebinde-Packungen**

(71) Anmelder: Kisters, Inc, Erlanger, KY 41018 (US)
(72) Erfinder: Marti, Jean, 47533 Kleve (DE); Neagle, Anrew C., Edgewood Ky 41017 (US)
(74) Vertreter: Röther, Peter, Dipl.-Phys.

(57) **Zusammenfassung**

Bei einer Vorrichtung zur Herstellung palettierfähiger Lagen von zu Verkaufspackungen bildenden Gebinden (2) zusammengefaßten Produkten wie Flaschen, Dosen und dergleichen, bestehend aus einer Zuführeinrichtung (1), einer dieser nachgeordneten Verteil- und Ausrichtstation zur lagenspezifischen Ausrichtung der Gebinde und einer der Verteil- und Ausrichtstation nachgeordneten Sammelstation (5) ist erfindungsgemäß vorgesehen, daß die Verteil- und Ausrichtstation einen Tisch (3) aufweist, der mit einem in etwa die gesamte Tischbreite einnehmenden Förderband (4) versehen ist und über dem mehrere, die Tischbreite diagonal überbrückende, parallel zueinander angeordnete Lineareinheiten (6) mit jeweils mindestens einem daran verfahrbaren Greifer zum Greifen jeweils eines Gebindes angeordnet sind, deren Verfahrgeschwindigkeit derart auf die Geschwindigkeit des Förderbandes abgestimmt ist, daß die gegriffenen Gebinde in einem Winkel von 90° zur Transportrichtung des Förderbandes auf diesem versetzbar sind und der Antrieb der Greifer sowie die Greiferfunktionen software-gesteuert sind.

## Beschreibung

Die Erfindung betrifft eine Vorrichtung zur Herstellung palettierfähiger Lagen von zu Verkaufspackungen bildenden Gebinden zusammengefaßten Produkten wie Flaschen, Dosen und dergleichen, bestehend aus einer Zuführeinrichtung, einer dieser nachgeordneten Verteil- und Ausrichtstation zur lagenspezifischen Ausrichtung der Gebinde und einer der Verteil- und Ausrichtstation nachgeordneten Sammelstation.

Derartige Verkaufsverpackungen bestehen beispielsweise aus in ein, zwei oder mehr Reihen nebeneinander angeordneten Behältern, wobei in jedem Gebin de vier, sechs, acht, zehn oder zwölf Behälter zusammengefaßt sind. Diese Gebinde sind in Folie eingeschlagen und eingeschrumpft oder aber in Kartons verpackt. Diese Gebinde sollen ohne zusätzliche Versandverpackungen palettiert werden. Hierzu ist es erforderlich, die einzelnen Gebinde vor dem eigentlichen Palettieren der Palettierstation in der vorgesehenen Anordnung zuzuführen. Das geschieht bislang dadurch, daß vorab mehrere Verkaufsverpackungen zu größeren Gebinden auf einem Tray und/oder nur in Folie zusammengefaßt werden, wonach dann diese zusammengefaßten Gebinde der Palettierstation zugeführt werden. Das hat seinen Grund darin, daß die bisher benutzten Verteil- und Ausrichtsysteme recht langsam arbeiten, da sie rein mechanisch gesteuert werden und rein mechanisch arbeiten. Zum Ausrichten der Gebinde stehen lediglich fest eingestellte diskrete Transportlinien zur Verfügung, auf denen die Gebinde ausgerichtet und zur Palettierstation transportiert werden. Bei einem Wechsel von einer Gebindegröße auf eine andere müssen konstruktive Maßnahmen getroffen werden, um die Transportlinien auf die neue Größe umzustellen.

Der Erfindung liegt daher die Aufgabe zugrunde, eine Vorrichtung der eingangs genannten Art so auszugestalten, daß zum einen die Geschwindigkeit des Verteil- und Ausrichtvorgangs erhöht wird, der Zwischenschritt der Zusammenfassung von Einzelgebinden zu größeren Gebinden entfallen kann und die Umstellung von einer Packungsgröße zur anderen schnell und auf einfache Weise erfolgen kann.

Die Erfindung löst diese Aufgabe gemäß dem kennzeichnenden Teil des Anspruchs 1 dadurch, daß die Verteil- und Ausrichtstation einen Tisch aufweist, der mit einem in etwa die gesamte Tischbreite einnehmenden Förderband versehen ist und über dem mehrere, die Tischbreite diagonal überbrückende, parallel zueinander angeordnete Lineareinheiten mit jeweils mindestens einem daran verfahrbaren Greifer zum Greifen jeweils eines Gebindes angeordnet sind, dessen Verfahrgeschwindigkeit derart auf die Geschwindigkeit des Förderbandes abgestimmt ist, daß die gegriffenen Gebinde in einem Winkel von 90° zur Transportrichtung des Förderbandes auf diesem versetzbar sind und der Antrieb der Greifer sowie die Greiferfunktionen soft-ware-gesteuert sind.

Mit Hilfe dieser Vorrichtung ist es möglich, Einzelgebinde, die mit Hilfe der Zuführeinrichtung in vorbestimmter Ausrichtung auf das über den Tisch laufende Förderband transportiert werden, jeweils mit einem an einer Lineareinheit angeordneten Greifer zu greifen, um 90° zur Transportrichtung des Förderbandes auf diesem seitlich zu verschieben, und zwar in eine Position, die bereits der späteren Palettierposition entspricht, was mit Hilfe der soft-ware-Steuerung geschieht. Nachdem das Einzelgebinde seine Position erreicht hat, wird der Greifer geöffnet und fährt in seine Wartestellung zurück, um das nächste Gebinde zu greifen. Mit Hilfe des Greifers werden die Einzelgebinde somit lediglich relativ zum Förderband transversal bewegt, eine longitudinale Relativbewegung findet nicht statt, da die Geschwindigkeit des Greifers an der Lineareinheit und die Geschwindigkeit des Förderbandes synchronisiert sind.

In der dem Ausrichttisch nachgeschalteten Sammelstation werden dann die ausgerichteten Einzelgebinde im gewünschten Palettiermuster zusammengefaßt. Von hier wird die so zusammengestellte palettierfähige Lage mittels bekannter Einrichtungen auf Paletten gesetzt.

Um die Palettierfläche optimal ausnutzen zu können, ist es mitunter erforderlich, daß die Einzelgebinde nicht alle in einer Richtung orientiert sind, sondern eine um 90° gedrehte Orientierung aufweisen. Nur so ist es bei bestimmten Packungsgrößen und -formen möglich, die Palettierfläche ohne unnötige Lücken zwischen den Gebinden auszunutzen.

Hierfür schlägt der Patentanspruch 2 vor, daß die Greifer um ± 90° aus der Neutralstellung verdrehbar sind. Hierdurch ist es möglich, daß ein in einer bestimmten Orientierung angefördertes Gebinde, das vom Greifer erfaßt worden ist, nicht nur um 90° aus der Förderrichtung auf dem Ausrichttisch versetzt wird, sondern zusätzlich noch zum 90° im Uhrzeigersinn oder entgegen dem Uhrzeigersinn verdreht werden kann. Die der Vorrichtung zugeordnete soft-ware-Steuerung orientiert dabei die Einzelgebinde entsprechend dem gewünschten Palettiermuster.

Dadurch, daß die Vorrichtung soft-ware-gesteuert wird und auf dem Ausrichttisch lediglich ein einziges Förderband läuft, ist die Vorrichtung konstruktiv einfacher aufgebaut als die bekannten Verteil- und Ausrichtsysteme, und die Gebinde können mit Hilfe der Soft-ware-Steuerung auf jede gewünschte Position in jeder gewünschten Orientierung auf dem einzigen Förderband positioniert werden. Hierdurch ist es weiterhin sehr einfach, die Vorrichtung auf veränderte Packungsgrößen und veränderte Zykluszeiten einzustellen.

Obwohl der Antrieb der Greifer in verschiedenster Weise ausgestaltet sein kann, schlägt der Anspruch 3 vor, daß die Greifer mittels in den Lineareinheiten geführten Zahnriemenantrieben verfahrbar sind, die mittels Servomotoren antreibbar und steuerbar sind. Diese bevorzugte Ausgestaltung hat zum einen den Vorteil der einfachen Konstruktion und zum anderen den Vorteil der einfachen Kopplung zwischen Soft-ware-Steuerung und Servomotoren.

Die Greifer selbst bzw. die Greiferbewegungen erfolgen gemäß Anspruch 4 durch pneumatischen Antrieb, da Druckluftsysteme ohnehin in jeder Produktionsstätte vorhanden sind.

Die Erfindung ist nicht darauf beschränkt, daß die Zuführeinrichtung lediglich aus einer Transportlinie besteht. Gemäß Anspruch 5 kann die Zuführeinrichtung auch mehrere parallel nebeneinander angeordnete Transportlinien aufweisen. Mit Hilfe der Soft-ware-Steuerung ist es für die Lineareinheiten kein Problem, mit den auf mehreren Transportlinien angeförderten Einzelgebinden fertig zu werden.

Gemäß Anspruch 6 ist weiterhin vorgesehen, daß der Sammelstation eine Zentriereinrichtung zugeordnet, die zum einen dafür sorgt, daß die Einzelgebinde praktisch lückenlos zusammengefaßt werden und zum anderen die so hergestellte palettierfähige Lage mit Hilfe der bekannten Vorrichtungen sicher und zuverlässig auf die bereitgestellte Palette befördert werden kann.

Hinzuzufügen ist noch, daß die Greifer an den Lineareinheiten unabhängig voneinander, also asynchron, oder auch simultan betrieben werden können. Hierdurch ist der Verteil- und Ausrichtvorgang noch schneller und zuverlässiger durchführbar.

Die Erfindung wird im folgenden anhand von Zeichnungen dargestellt und näher erläutert.

Es zeigen:
- Fig. 1:: in Draufsicht und systematischer Darstellung eine Verteil- und Ausrichtvorrichtung,
- Fig. 2:: zwei Beispiele von durch die Vorrichtung gemäß Fig. 1 hergestellten Palettiermustern.

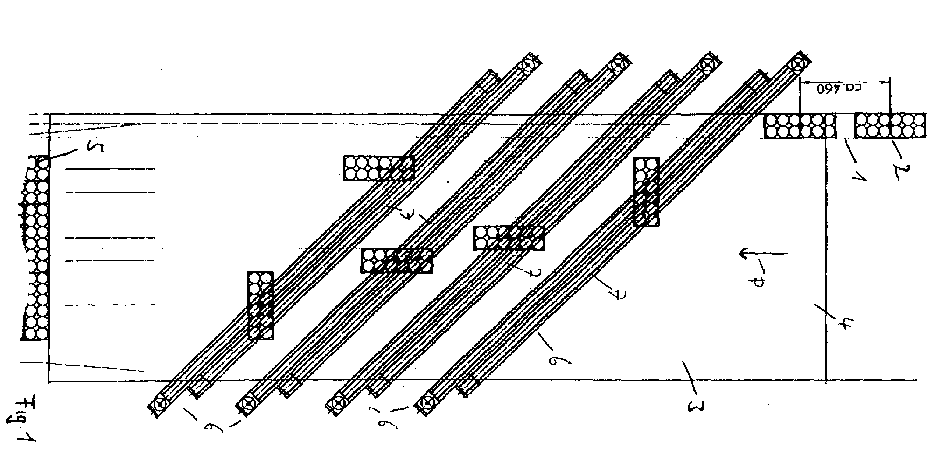

In der Fig. 1 ist in schematischer Darstellung eine Vorrichtung zum Verteilen und Ausrichten von über eine lediglich angedeutete Zuführeinrichtung 1 angeförderten Einzgelgebinden 2 dargestellt. Sie besteht im wesentlichen aus einem Tisch 3, auf dem ein praktisch die gesamte Breite des Tisches 3 einnehmendes Förderband 4 in Richtung des Pfeiles P verläuft. Am Ende des Tisches 3 befindet sich eine in abgebrochener Darstellung gezeichnete Sammelstation 5, in der die von der Verteil- und Ausrichtvorrichtung in die gewünschten Positionen versetzten Einzelgebinde 2 gesammelt werden und dort zu einer vorbestimmten palettierfähigen Lage zusammengestellt werden.

Über dem Tisch 3 sind im vorliegenden Ausführungsbeispiel vier Lineareinheiten 6 angeordnet, und zwar den Tisch diagonal überbrückend. An jeder Lineareinheit 6 ist ein nicht dargestellter Greifer angeordnet, der mittels eines Zahnriemenantriebs 7 in Richtung der Längsachse der Lineareinheiten hin und her bewegbar ist. Die Zahnriemen 7 werden mit Hilfe von Servomotoren angetrieben. Die Öffnungs- und Schließbewegung der Greifer erfolgt mittels pneumatischer Antriebe. Zusätzlich zu der Linearbewegung können die Greifer im Uhrzeigersinn oder entgegen dem Uhrzeigersinn um 90° verdreht werden. Die Steuerung der gesamten Anlage erfolgt durch eine spezielle soft-ware, durch die die Verfahrgeschwindigkeit der Greifer derart mit der Geschwindigkeit des Förderbandes 4 synchronisiert wird, daß die vom Greifer erfaßten Einzelgebinde 2 beim Verfahren der Greifer an den Lineareinheiten lediglich eine Transversalbewegung auf dem Förderband 4 ausführen, d.h. die Einzelgebinde werden lediglich seitlich um 90° versetzt, vollführen aber keine longitudinale Relativbewegung auf dem Förderband. Die Soft-ware-Steuerung sorgt ebenfalls dafür, daß das jeweilige Einzelgebinde 2 punktgenau auf die Position verfahren wird, die seiner späteren Position auf der Palette entspricht.

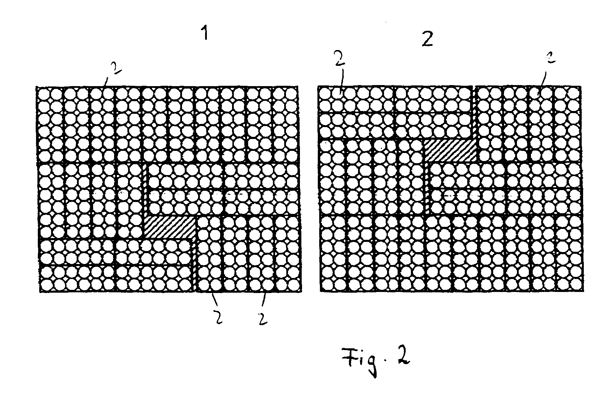

Zur Realisierung der in der Fig. 2 beispielhaft dargestellten Palettiermuster sorgt die Soft-ware-Steuerung weiterhin dafür, daß einzelne Gebinde 2 in Längsrichtung orientiert bleiben, andere hingegen um 90° verdreht werden.

Obwohl in der Fig. 1 lediglich eine Zuführeinrichtung mit einer einzigen Transportlinie dargestellt ist, können selbstverständlich auch mehrere Transportlinien parallel zueinander angeordnet vorgesehen sein.

Das mit Hilfe der dargestellten Vorrichtung geführte Verfahren läuft folgendermaßen ab.

Von der Zuführeinrichtung 1 gelangen die Einzelgebinde auf den Tisch 3 bzw. auf das darauf laufende Förderband 4. Das Einzelgebinde 1 wird dann von einem in seiner Warteposition befindlichen Greifer an einer der Lineareinheiten 6 gegriffen, um 90° seitlich auf dem Förderband 4 in die gewünschte Position versetzt und erforderlichenfalls um 90° gedreht. Nach Erreichen der vorbestimmten Position öffnet der Greifer und fährt in seine Warteposition zurück, während das abgesetzte Einzelgebinde 2 mittels des Förderbandes 4 in die Sammelstation 5 transportiert wird. Dieser Sammelstation 5 ist eine nicht dargestellte Zentriereinheit zugeordnet, die dafür sorgt, daß die mit Hilfe der Vorrichtung zusammengestellte Palettierlage sicher und zuverlässig auf eine bereitgestellte Palette abgesetzt werden kann.

## Patentansprüche

1. Vorrichtung zur Herstellung palettierfähiger Lagen von zu Verkaufspackungen bildenden Gebinden zusammengefaßten Produkten wie Flaschen, Dosen und dergleichen, bestehend aus einer Zuführeinrichtung, einer dieser nachgeordneten Verteil- und Ausrichtstation zur lagenspezifischen Ausrichtung der Gebinde und einer der Verteil- und Ausrichtstation nachgeordneten Sammelstation,
dadurch gekennzeichnet,
daß die Verteil- und Ausrichtstation einen Tisch (3) aufweist, der mit einem in etwa die gesamte Tischbreite einnehmenden Förderband (4) versehen ist und über dem mehrere, die Tischbreite diagonal überbrückende, parallel zueinander angeordnete Lineareinheiten (6) mit jeweils mindestens einem daran verfahrbaren Greifer zum Greifen jeweils eines Gebindes (2) angeordnet sind, deren Verfahrgeschwindigkeit derart auf die Geschwindigkeit des Förderbandes (4) abgestimmt ist, daß die gegriffenen Gebinde (2) in einem Winkel von 90° zur Transportrichtung des Förderbandes (4) auf diesem versetzbar sind und der Antrieb der Greifer sowie die Greiferfunktionen soft-ware-gesteuert sind.

2. Vorrichtung nach Anspruch 1,
dadurch gekennzeichnet,
daß die Greifer um ± 90° aus der Neutralstellung verdrehbar sind.

3. Vorrichtung nach Anspruch 1 oder 2,
dadurch gekennzeichnet,
daß die Greifer mittels in den Lineareinheiten (6) geführten Zahnriemenantrieben (7) verfahrbar sind, die mittels Servomotoren antreibbar und steuerbar sind.

4. Vorrichtung nach einem der Ansprüche 1 bis 3,
dadurch gekennzeichnet,
daß die Greifer pneumatisch betätigbar sind.

5. Vorrichtung nach einem der Ansprüche 1 bis 4,
dadurch gekennzeichnet,
daß die Zuführeinrichtung (1) mehrere parallel nebeneinander angeordnete Transportlinien aufweist.

6. Vorrichtung nach einem der Ansprüche 1 bis 5,
dadurch gekennzeichnet,
daß der Sammelstation (5) eine Zentriereinrichtung zugeordnet ist.
